# EUROPÄISCHE PATENTSCHRIFT

(11) **EP 1 108 298 B1**
(45) Veröffentlichungstag und Bekanntmachung des Hinweises auf die Patenterteilung: **22.10.2003**
(21) Anmeldenummer: 99944528.1
(22) Anmeldetag: 26.08.1999
(51) Int. Cl.: H04J 3/06

(54) **TELEKOMMUNIKATIONSSYSTEM SOWIE VERFAHREN ZUM BETREIBEN DESSELBEN**
TELECOMMUNICATIONS SYSTEM AND A METHOD FOR OPERATING THE SAME
SYSTEME DE TELECOMMUNICATION ET PROCEDE POUR LE FAIRE FONCTIONNER

(30) Priorität: 28.08.1998 EP 98116321
(43) Veröffentlichungstag der Anmeldung: 20.06.2001
(73) Patentinhaber: SIEMENS AKTIENGESELLSCHAFT, 80333 München (DE)
(72) Erfinder: HENNEN, Stefan, D-82131 Gauting (DE); RODER, Annette, D-81377 München (DE); SKORKA, Klemens, D-80807 München (DE); STEINIGKE, Klaus, D-81369 München (DE)
(86) Internationale Anmeldenummer: EP9906285
(87) Internationale Veröffentlichungsnummer: WO00013353

(56) Entgegenhaltungen:
- BERLIN G ET AL: "ALCATEL 1641 SX SYNCHRONOUS DIGITAL CROSS-CONNECT" COMMUTATION ET TRANSMISSION, Bd. 17, Nr. 2, 1. Januar 1995 (1995-01-01), Seiten 35-44, XP000505612
- ANDREWS M ET AL: "BT NORTHERN IRELAND STAR SDH NETWORK NISTAR" BRITISH TELECOMMUNICATIONS ENGINEERING, Bd. 12, Nr. PART 03, 1. Oktober 1993 (1993-10-01), Seiten 207-215, XP000405932

## Beschreibung

Die Erfindung bezieht sich auf ein Verfahren zum Betreiben eines Telekommunikationssystems gemäß dem Oberbegriff des Patentanspruchs 1 sowie auf ein Telekommunikationssystem gemäß dem Oberbegriff des Patentanspruchs 17. Insbesondere bezieht sich die Erfindung auf ein Telekommunikationssystem und ein entsprechendes Verfahren, bei denen vorhandene Redundanzen von Datenverkehrseinheiten und Taktbehandlungseinheiten vorteilhaft eingerichtet werden.

Der Begriff Telekommunikation ist eine Sammelbezeichnung für alle nachrichtentechnischen Übertragungsverfahren durch vielfältige Dienste bei der Kommunikation über größere Entfernungen zwischen Mensch-Mensch, Mensch-Maschine und Maschine-Maschine. Durch das Zusammenwachsen von Informations- und Kommunikationstechnik erhält die Telekommunikation eine ganz besondere Bedeutung. Die Telekommunikation ist durch die Übertragungstechnik mit Kabelübertragungstechnik, Sprech- und Datenfunk, Satellitentechnik, Lichtwellenleitertechnik, Modems, digitale Vermittlungsanlagen und Vermittlungstechnik und lokale Netze gekennzeichnet.

Um einen sinnvollen Nachrichtenaustausch zwischen zwei (oder mehreren) Partnern zu ermöglichen, ist neben der reinen Übertragung von Nachrichten ein Regelwerk erforderlich, das die für eine sinnvolle Kommunikation einzuhaltenden Konventionen in Form von Protokollen festlegt. Derartige Regeln werden z.B. in den Dienstspezifikationen der einzelnen Ebenen des OSI-Referenzmodells (Open Systems Interconnection) beschrieben. Das OSI-Referenzmodell wurde im Jahre 1983 von der Internationalen Standardisierungsorganisation (ISO) ausgehend von der Übertragung von Informationen im Bereich der Datenverarbeitung erstellt und hat inzwischen eine sehr weite Verbreitung auch in den Anwendungen der Kommunikationssysteme gefunden. Das OSI-Modell stellt lediglich Prinzipien der Nachrichtenübertragung dar und definiert folglich nur die Logik des Informationsflusses zwischen Teilnehmern. Da der OSI-Standard keine Festlegungen über die physikalische Übertragung von Kommunikation beinhaltet, ist er herstellerunabhängig, bedarf jedoch zur Realisierung eines Kommunikationssystems ergänzende Protokolle zur detaillierteren Festlegung basierend auf weiteren, z.B. proprietären Standards.

Prinzipiell kann die asynchrone von der synchronen Kommunikation unterschieden werden. Unter asynchroner Kommunikation wird im allgemeinen der zeitlich völlig entkoppelte Austausch von Nachrichten zwischen einer Sende- und einer Empfangsinstanz verstanden. Es ist nicht vorhersehbar, wann eine Sendeund die zugehörige Empfangsoperation angestoßen wird.

Demgegenüber wird unter synchroner Kommunikation der Austausch von Nachrichten zwischen einer Sende- und einer Empfangsinstanz verstanden, falls dieser Austausch in einem festen Zeitraster geschieht. Dabei müssen eine Sende- und die zugehörige Empfangsoperation immer zeitgleich ausgeführt werden.

Telekommunikationsnetzwerke sind durch die Möglichkeit des bi- und multidirektionalen Datenaustausches zwischen den Teilnehmern gekennzeichnet. Dies setzt voraus, daß jeder beteiligte Teilnehmer mit jedem anderen über dasselbe Medium kommunizieren kann. Die einfachste Realisierung hierzu ist die Kommunikation aller Teilnehmer im Basisband. Aufgrund der Vielzahl paralleler aktiver Teilnehmer kommen hier vornehmlich Verfahren zum Einsatz, die den Teilnehmern die verfügbare Bandbreite im Zeitmultiplex statisch zuordnen.

Aufgrund der steigenden Nutzung der Lichtwellenleiter-Technik, der Notwendigkeit einer verbesserten interkontinentalen Datenkommunikation und den gestiegenen Leistungsanforderungen, wird die seit den 60er Jahren vorherrschende Plesiochrone Digitale Hierarchie (PDH) zunehmend durch die Synchrone Digitale Hierarchie (SDH) abgelöst. Der von der International Telekommunications Union (ITU) verabschiedete internationale Standard SDH resultierte aus dem amerikanischen Standard SONET (Synchronous Optical Network), der aus dem von der Firma Bellcore in den USA entwickelten und von dem Industrial Carriers Compatibility Forum (ICCF) 1984 übernommenen Standard hervorgeht.

Traditionelle Telekommunikationsstrukturen basieren auf Zeitmultiplexverfahren (TDM, Time Division Multiplexing). Dem gegenüber sendet ATM (Asynchronous Transfer Mode) Daten lediglich dann, wenn dies erforderlich ist, d. h. Rahmen werden asynchron gesendet. Die ersten Empfehlungen zu ATM wurden in den Jahren 1990/91 veröffentlicht, und sowohl die ITU als auch das im September 1991 gegründete ATM-Forum befaßten sich mit der Standardisierung von ATM.

Wie auch andere Übertragungsverfahren, basiert ATM grundsätzlich auf einer Paketübertragungstechnik. Ähnlich dem OSI-Referenzmodeil ist auch ATM vertikal in mehrere Schichten unterteilt. Darüber hinaus wird eine horizontale Gliederung nach Aspekten des Datenaustausches zwischen Nutzern, Aspekten der Kommunikationssteuerung und Managementaspekten vorgenommen. Eine Abbildung der einzelnen ATM-Schichten auf die Schichten des OSI-Referenzmodells ist nicht ohne weiteres möglich, da die Funktionen der ATM-Schichten zum Teil über verschiedene OSI-Schichten verteilt sind. In OSI-Terminologie wäre ATM auf der Bitübertragungsebene angesiedelt, bietet darüber hinaus jedoch auch noch einige Funktionen der Sicherungsebene.

ATM nutzt zur Übertragung ausschließlich Pakete mit einer festen Länge von 53 Bytes. Diese starre Übertragungseinheit wird als ATM-Zelle bezeichnet und besteht aus einem fünf Bytes langen Header sowie aus 48 Bytes Nutzinformation (Payload). Je nach Belegung der Bits 5-8 des ersten Headerbytes werden UNI-Zellen von NNI-Zellen unterschieden.

Um eine schrittweise Einführung des ATM-Übertragungsverfahrens sowohl in Weitverkehrsnetzen als auch in lokalen Netzen zu ermöglichen, ist ATM nicht an ein bestimmtes Übertragungsmedium gebunden. Die physikalische Schicht gliedert sich daher in eine medienabhängige Teilschicht (PM) und eine vom Übertragungsmedium unabhängige Teilschicht (TC). Die Übertragung einer Zelle geschieht dabei in einem konutinuierlichen Zellenstrom. Eine Festzuordnung zwischen virtuellen ATM-Kanälen und Zeitschlitzen des Medium besteht nicht. Vielmehr werden jedem virtuellen Kanal je nach benötigter Bandbreite mehrere Zeitschlitze hintereinander dynamisch zugeordnet. Die Asynchronität bei ATM besteht daher nicht in einem zeitlich asynchronen Zugriff auf das Übertragungsmedium, sondern in der dynamischen Vergabe der für einen virtuellen Kanal nutzbaren Bandbreite anhand der Anzahl der benötigten Zeitschlitze.

Die direkte Übertragung von ATM-Zellen ist die effizienteste, da ein zusätzlicher Overhead durch die Anpassung auf die Übertragungsrahmen des Mediums entfällt. Statt dessen wird der Zellenstrom direkt Bit für Bit übertragen. Dabei besteht der wesentliche Nachteil der direkten Zellübertragung in der Inkompatibilität zu bisherigen Übertragungsverfahren in Weitverkehrsnetzen, da die Infrastruktur dieser Netze hauptsächlich auf PDH- und SDH-Systemen beruht.

Die Übertragung über SDH basiert auf der Verschachtelung mehrerer ATM-Zellen in den synchronen Transportmodulen der SDH-Hierarchie. Die Übertragung von ATM-Zellen über SDH ist bislang für SDH-Übertragungsraten von 155 Mbps und 622 Mbps spezifiziert (STM-1 und STM-4). Vorgesehen ist darüber hinaus die Nutzung der STM-16-Hierarchiestufe mit 2,5 Gbps.

Ebenso wie eine ATM-Übertragung über SDH ist auch die Nutzung bestehender PDH-Netze durch die ITU vorgesehen. Normiert wurde eine ATM-Übertragung über PDH-Hierarchiestufen zwischen 1,5 Mbps und 139 Mbps.

Grundsätzlich sind in Telekommunikationssystemen solche Schaltkreise, die zur Übertragung, Auswertung, Formatierung, Behandlung und Verarbeitung von Nutz- und Zusatzdaten vorgesehen sind, von solchen Schaltkreisen zu unterscheiden, die dem Empfang, der Erzeugung, Abwandlung, Sychronisation und Weiterleitung von Taktsignalen dienen.

Telekommunikationssysteme, die Verbindung zu standardisierten Übertragungsnetzen wie PDH, SDH oder SONET haben, erfordern i.d.R. eine Synchronisation, um die notwendige Qualität an der Schnittstelle zum Übertragungsnetzwerk zu erreichen. Dabei werden zwei Betriebsarten der Synchronisation unterschieden. Im Falle einer externen Sychronisation wird dem System von einer externen Synchronisationsquelle ein Takt direkt zugeführt. Demgegenüber wird bei einer Synchronisation über die Übertragungsstrecke der Takt aus dem empfangenen Datenstrom der Schnittstelle gewonnen und dem System als Synchronisationsquelle zugeführt. Dazu enthalten die empfangenen Datenrahmen neben der Nutzinformation unter anderem auch Zusatzinformationen, die die Qualität des Taktsignals einer Gegenstelle beschreiben.

Bei einem Teil der Schnittstellentypen in Plesiochroner Digitaler Hierarchie wird die Taktqualität im Timing-Marker-Bit übertragen. Im Falle von SONET und der Synchronen Digitalen Hierarchie wird die Qualität des Taktsignals im sog. SSM-Byte (Synchronisation Status Message) kommuniziert.

Da die Taktqualität einer Taktquelle, zu der das Telekommunikationssystem synchronisiert ist, veränderlich sein und ein Referenztakt auch ausfallen kann, werden zur Synchronisation von Telekommunikationssystemen mindestens zwei zueinander redundante Referenztakte verwendet. Dabei muß der Ausfall eines Referenztaktes vom Telekommunikationssystem erkannt und sodann automatisch auf den redundanten Referenztakt umgeschaltet werden.

Zur Sicherung der fehlerfreien Datenübertragung in einem Telekommunikationssystem weisen Telekommunikationssysteme Redundanzen sowohl im Datenverkehr als auch in der Taktbehandlung auf. Grundsätzlich sind die Lineredundanz und die Boardredundanz zu unterscheiden. Bei der Lineredundanz wird eine zu einer Leitung redundante Leitung eingerichtet. Bei der Boardredundanz bestehen zueinander redundante Baugruppen.

Sowohl bei der Line- als auch bei der Boardredundanz sind 1+1-, 1:1- und 1:N-Redundanzen zu unterscheiden. Bei der 1+1-Redundanz führen beide zueinander redundante Einheiten (Leitungen, Baugruppen) im fehlerfreien Zustand die gleiche Information. Dabei wird eine der Einheiten als aktive Einheit ausgewählt, während die andere in Bereitschaft ist ("hot standby").

Bei der 1:1-Redundanz führen beide zueinander redundante Einheiten im fehlerfreien Zustand eine ungleiche Information. Dabei wird festgelegt, welche der redundanten Einheiten Informationen höherer Priorität als die andere Einheit überträgt bzw. verarbeitet. Im Fehlerfall der höherprioren Einheit wird der Betrieb der niederprioren Einheit unterbrochen, damit die Übertragung bzw. Verarbeitung der wichtigeren Information fortgesetzt werden kann. Bei der 1:N-Redundanz steht eine niederpriore Einheit N anderen Einheiten gegenüber.

Wird eine Einheit, wie beispielsweise eine Schnittstellenkarte 5, neu eingerichtet, so gibt der Betreiber die im Telekommunikationssystem gewünschten Redundanzen an. Diese Redundanzen werden dann mittels software- oder hardwaregesteuerten Schaltmitteln eingerichtet. Darüber hinaus werden die Informationen über die eingerichteten Redundanzen in Datenbanken gehalten.

Dazu verfügt das Telekommunikationssystem über eine zentrale Datenbank, in der neben Informationen über den Zustand einzelner Baugruppen, Alarmmeldungen über ausgefallene Einheiten und der Anzahl der Referenztakte auch Daten betreffend jeden einzelnen Referenztakt angelegt sind. Diese taktspezifischen Daten umfassen die Angabe der Schnittstellenkarte, von der der Referenztakt und die Nutzdaten genommen werden, die Priorität, die aktuelle Qualität und die Verfügbarkeit des Referenztaktes sowie Alarmmeldungen über ausgefallene Referenztakte.

Neben der zentralen Datenbank verfügt das Telekommunikationssystem ferner über dezentrale (lokale) Datenbanken, auf die die einzelnen Einheiten Zugriff haben. Diese dezentralen Datenbanken sind Abbilder der zentralen Datenbank, enthalten jedoch lediglich solche Daten, die für die jeweilige Einheit benötigt werden. Werden Daten in der zentralen Datenbank verändert, aktualisiert das Telekommunikationssystem auch die dezentralen Datenbanken.

Eine solche Änderung der zentralen Datenbank erfolgt beispielsweise, wenn eine periphere Prozessorplattenform (eine Schnittstellenkarte, ein Taktgenerator) oder eine andere Einheit ausfällt, sich die Qualität eines Referenztaktes ändert oder ein neuer Referenztakt eingerichtet wird.

In herkömmlichen Telekommunikationssystemen gibt beim Einrichten einer Einheit, wie beispielsweise einer Schnittstellenkarte 5, der Betreiber die gewünschte Redundanz sowohl für den Datenverkehr als auch für die Taktbehandlung getrennt an.

Dies weist den Nachteil auf, daß auch solche Einstellungen möglich sind, bei denen durch das Vorhandensein redundanter Einheiten beispielsweise lediglich der Datenverkehr, nicht aber die Taktbehandlung gesichert ist. Dabei kann der Fall auftreten, daß bei einem Ausfall oder einer Güteminderung der Taktsignale ein Datenverkehr durch Verschiebung von Taktfrequenzen fehlerhaft wird, obwohl Redundanzen eingerichtet worden sind.

Der Erfindung liegt somit die Aufgabe zugrunde, ein Verfahren zum Betreiben eines Telekommunikationssystems sowie ein Telekommunikationssystem mit erhöhter Betriebssicherheit anzugeben.

Diese Aufgabe wird durch die Gegenstände der Patentansprüche 1 und 17 gelöst.

Vorteilhafte Ausgestaltungen der Erfindung sind Gegenstände der abhängigen Ansprüche.

Mit der Erfindung wird insbesondere erreicht, daß beim Einrichten redundanter Einheiten (Leitungen, Baugruppen) stets Redundanzen sowohl den Datenverkehr als auch die Taktbehandlung betreffend eingerichtet werden. Dadurch werden Fehlerquellen vermieden und eine erhöhte Ausfallsicherheit erzielt.

Weiter wird mit der Erfindung in vorteilhafter Weise ein Verfahren zum Betreiben eines Telekommunikationssystems sowie ein Telekommunikationssystem geschaffen, bei dem der Betreiber beim Einrichten des Referenztaktes dessen Redundanz nicht angeben muß, was zu einer Verringerung des Arbeitsaufwandes führt. Darüber hinaus sind alle Informationen über eingerichtete Redundanzen zum frühest möglichen Zeitpunkt über zentrale und dezentrale Datenbanken vorhanden.

Bevorzugte Ausführungsbeispiele der Erfindung werden nachstehend erläutert. Es zeigt:

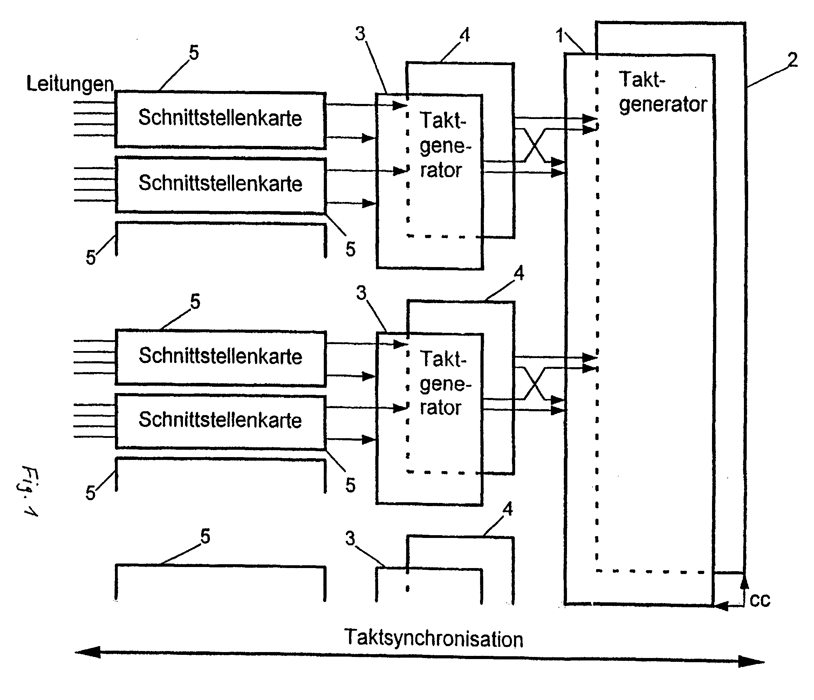

- Fig. 1: eine Übersicht über Taktbehandlungseinheiten eines ATM-Knotens.

Die in Fig. 1 dargestellten Leitungen, Schnittstellenkarten 5 und Taktgeneratoren 3,4 können redundant betrieben werden. Darüber hinaus können weitere Taktbehandlungseinheiten Redundanzen aufweisen. Schließlich weisen auch die nicht in Fig. 1 dargestellten Datenverkehrseinheiten und -leitungen Redundanzen auf.

Gemäß des bevorzugten Ausführungsbeispiels richtet der Betreiber des Telekommunikationssystems eine 1+1-, 1:N- oder 1:1-Redundanz einer Leitung oder einer Baugruppe, die dem Datenverkehr dient, ein. Diese Redundanz wird in einer Datenbank abgelegt. Anschließend wird automatisch mittels einer Softwaresteuerung die Redundanz des Datenverkehrs ermittelt und auf die Taktbehandlung angewendet. Dazu wird eine entsprechende Redundanz der Taktbehandlungseinrichtungen hardwaregesteuert eingestellt. Anschließend werden die eingestellten, redundanten Einheiten (Leitungen, Baugruppen) eingerichtet und eine der redundanten Einheiten zum aktiven Betrieb ausgewählt. Dazu werden vorzugsweise Abfragen der lokalen Datenbank erfolgen.

Vorzugsweise wird das erfindungsgemäße Verfahren in einem erfindungsgemäßen Telekommunikationssystem zur Einrichtung einer Taktquelle angewendet, die eine 1+1-Lineredundanz aufweist.

## Patentansprüche

1. Verfahren zum Betreiben eines Telekommunikationssystems, das Datenverkehrseinheiten (5) und Taktbehandlungseinheiten (1 - 4) enthält, die sowohl Leitungen als auch Baugruppen umfassen können, von denen jeweils wenigstens ein Teil redundant betrieben werden kann, wobei das Verfahren die folgenden Schritte umfaßt:
Festlegen einer Redundanz entweder für den wenigstens einen Teil der Datenverkehrseinheit (5) oder für den wenigstens einen Teil der Taktbehandlungseinheiten (1 - 4), und
Einrichten der festgelegten Redundanz für den wenigstens einen Teil, für den die Redundanz festgelegt worden ist, **gekennzeichnet durch** den Schritt:
Einrichten einer der festgelegten Redundanz entsprechenden Redundanz für den anderen wenigstens einen Teil, für den die Redundanz nicht festgelegt worden ist.

2. Verfahren nach Anspruch 1,
**dadurch gekennzeichnet,**
**daß** das Telekommunikationssystem ein ATM-Telekommunikationssystem ist.

3. Verfahren nach Anspruch 1 oder 2,
**dadurch gekennzeichnet,**
**daß** einer der Schritte des Einrichtens einen Schritt des Schreibens wenigstens einer Datenbank enthält, die eine zentrale oder eine lokale Datenbank sein kann.

4. Verfahren nach einem der Ansprüche 1 bis 3,
**dadurch gekennzeichnet,**
**daß** der Schritt des Einrichtens einer der festgelegten Redundanz entsprechenden Redundanz einen Schritt des Ermittelns der festgelegten Redundanz enthält.

5. Verfahren nach Anspruch 4,
**dadurch gekennzeichnet,**
**daß** der Schritt des Ermittelns der festgelegten Redundanz softwaregesteuert ist.

6. Verfahren nach einem der Ansprüche 1 bis 5,
**dadurch gekennzeichnet,**
**daß** der Schritt des Einrichtens der der festgelegten Redundanz entsprechenden Redundanz diese Redundanz hardwaregesteuert einstellt.

7. Verfahren nach einem der Ansprüche 1 bis 6,
**dadurch gekennzeichnet,**
**daß** das Verfahren ferner einen Schritt des Auswählens einer der redundanten Datenverkehrseinheiten und Taktbehandlungseinheiten umfaßt.

8. Verfahren nach einem der Ansprüche 1 bis 7,
**dadurch gekennzeichnet,**
**daß** der Schritt des Festlegens der Redundanz für wenigstens einen Teil der Datenverkehrseinheiten erfolgt und die ihr entsprechende Redundanz für wenigstens einen Teil der Taktbehandlungseinheiten eingerichtet wird.

9. Verfahren nach einem der Ansprüche 1 bis 8,
**dadurch gekennzeichnet,**
**daß** wenigstens eine der festgelegten oder ihr entsprechenden Redundanzen eine Boardredundanz ist.

10. Verfahren nach einem der Ansprüche 1 bis 9,
**dadurch gekennzeichnet,**
**daß** wenigstens eine der festgelegten oder ihr entsprechenden Redundanzen eine Lineredundanz ist.

11. Verfahren nach einem der Ansprüche 1 bis 10,
**dadurch gekennzeichnet,**
**daß** wenigstens eine der festgelegten oder ihr entsprechenden Redundanzen eine 1:N-Redundanz ist.

12. Verfahren nach Anspruch 11,
**dadurch gekennzeichnet,**
**daß** die 1:N-Redundanz eine 1:1-Redundanz ist.

13. Verfahren nach einem der Ansprüche 1 bis 12,
**dadurch gekennzeichnet,**
**daß** wenigstens eine der festgelegten oder ihr entsprechenden Redundanzen eine 1+1-Redundanz ist.

14. Verfahren nach einem der Ansprüche 1 bis 13,
**dadurch gekennzeichnet,**
**daß** der wenigstens eine Teil der Datenverkehrseinheiten wenigstens eine Schnittstellenkarte (5) umfaßt.

15. Verfahren nach einem der Ansprüche 1 bis 14,
**dadurch gekennzeichnet,**
**daß** der wenigstens ein Teil der Taktbehandlungseinheiten wenigstens eine Schnittstellenkarte (5) umfaßt.

16. Verfahren nach einem der Ansprüche 1 bis 15,
**dadurch gekennzeichnet,**
**daß** der wenigstens eine Teil der Taktbehandlungseinheiten einen Taktgenerator (1 - 4) umfaßt.

17. Telekommunikationssystem, umfassend:
Datenverkehrseinheiten (5) zum Durchführen eines Datenverkehrs, wobei die Datenverkehrseinheiten Leitungen und Baugruppen umfassen können und redundant betrieben werden können,
Taktbehandlungseinheiten (1 - 4) zur Taktbehandlung, wobei die Taktbehandlungseinheiten Leitungen und Baugruppen umfassen können und redundant betrieben werden können,
Mittel zum Einrichten einer Redundanz wenigstens eines Teils der Datenverkehrseinheiten (5), und
Mittel zum Einrichten einer Redundanz wenigstens eines Teils der Taktbehandlungseinheiten (1 - 4),
**dadurch gekennzeichnet,**
**daß** die Mittel zum Einrichten so miteinander verbunden sind, daß sie die Einrichtung der Redundanz einer der Mittel zum Einrichten durch die Übernahme einer der Redundanz der anderen Mittel zum Einrichten entsprechenden Redundanz ermöglichen.

18. Telekommunikationssystem nach Anspruch 17,
**dadurch gekennzeichnet,**
**daß** die Datenverkehrseinheiten wenigstens eine Schnittstellenkarte (5) umfassen.

19. Telekommunikationssystem nach Anspruch 17 oder 18,
**dadurch gekennzeichnet,**
**daß** die Taktbehandlungseinheiten wenigstens eine Schnittstellenkarte (5) umfassen.

20. Telekommunikationssystem nach einem der Ansprüche 17 bis 19,
**dadurch gekennzeichnet,**
**daß** das Telekommunikationssystem ein ATM-Telekommunikationssystem ist.

21. Telekommunikationssystem nach Anspruch 20,
**dadurch gekennzeichnet,**
**daß** die Taktbehandlungseinheiten wenigstens einen Taktgenerator (1-4) umfassen.

22. Telekommunikationssystem nach einem der Ansprüche 17 bis 21,
**dadurch gekennzeichnet,**
**daß** wenigstens eines der Mittel zum Einrichten so ausgebildet ist, daß es Zugriff auf eine zentrale Datenbank hat.

23. Telekommunikationssystem nach einem der Ansprüche 17 bis 22,
**dadurch gekennzeichnet,**
**daß** wenigstens eines der Mittel zum Einrichten so ausgebildet ist, daß es Zugriff auf wenigstens eine lokale Datenbank hat.

24. Telekommunikationssystem nach einem der Ansprüche 17 bis 23,
**dadurch gekennzeichnet,**
**daß** wenigstens eines der Mittel zum Einrichten Mittel zum Ermitteln einer Redundanz umfaßt.

25. Telekommunikationssystem nach Anspruch 24,
**dadurch gekennzeichnet,**
**daß** die Mittel zum Ermitteln softwaregesteuert sind.

26. Telekommunikationssystem nach einem der Ansprüche 17 bis 25,
**dadurch gekennzeichnet,**
**daß** die Mittel zum Einrichten so ausgebildet sind, daß sie die Redundanzen hardwaregesteuert einstellen.

27. Telekommunikationssystem nach einem der Ansprüche 17 bis 26,
**dadurch gekennzeichnet,**
**daß** die Mittel zum Einrichten Mittel zum Auswählen einer der redundanten Einheiten umfassen.

28. Telekommunikationssystem nach einem der Ansprüche 17 bis 27,
**dadurch gekennzeichnet,**
**daß** die Mittel zum Einrichten der Redundanz wenigstens eines Teils der Taktbehandlungseinheiten eine der der Redundanz der Datenverkehrseinheiten entsprechende Redundanz einrichten.

29. Telekommunikationssystem nach einem der Ansprüche 17 bis 28,
**dadurch gekennzeichnet,**
**daß** wenigstens eine der Redundanzen eine Boardredundanz ist.

30. Telekommunikationssystem nach einem der Ansprüche 17 bis 29,
**dadurch gekennzeichnet,**
**daß** wenigstens eine der Redundanzen eine Lineredundanz ist.

31. Telekommunikationssystem nach einem der Ansprüche 17 bis 30,
**dadurch gekennzeichnet,**
**daß** wenigstens eine der Redundanzen eine 1:N-Redundanz ist.

32. Telekommunikationssystem nach Anspruch 31,
**dadurch gekennzeichnet,**
**daß** die 1:N-Redundanz eine 1:1-Redundanz ist.

33. Telekommunikationssystem nach einem der Ansprüche 17 bis 32,
**dadurch gekennzeichnet,**
**daß** wenigstens eine der Redundanzen eine 1+1-Redundanz ist.

## Claims

1. Method for operating a telecommunications system, which contains data traffic units (5) and clock handling units (1-4), which may have both lines and assemblies, at least some of which may in each case be operated in a redundant manner, with the method comprising the following steps:
definition of redundancy either for the at least one part of the data traffic unit (5) or for at least some of the clock handling units (1-4), and
setting up the defined redundancy for the at least one part for which the redundancy has been defined,
**characterized by** the following step:
setting up redundancy, which corresponds to the defined redundancy, for the other at least one part for which the redundancy has not been defined.

2. Method according to Claim 1,
**characterized**
**in that** the telecommunications system is an ATM telecommunications system.

3. Method according to Claim 1 or 2,
**characterized**
**in that** one of the setting-up steps includes a step for writing to at least one databank, which may be a central databank or a local databank.

4. Method according to one of Claims 1 to 3,
**characterized**
**in that** the step of setting up redundancy which corresponds to the defined redundancy includes a step for determining the defined redundancy.

5. Method according to Claim 4,
**characterized**
**in that** the step for determining the defined redundancy is software-controlled.

6. Method according to one of Claims 1 to 5,
**characterized**
**in that** the step for setting up the redundancy which corresponds to the defined redundancy sets this redundancy on a hardware-controlled basis.

7. Method according to one of Claims 1 to 6,
**characterized**
**in that** the method also comprises a step for selecting one of the redundant data traffic units and clock handling units.

8. Method according to one of Claims 1 to 7,
**characterized**
**in that** the step for defining the redundancy is carried out for at least some of the data traffic units, and the redundancy which corresponds to it is set up for at least some of the clock handling units.

9. Method according to one of Claims 1 to 8,
**characterized**
**in that** at least one of the defined redundancies, or of the redundancies which correspond to it, is board redundancy.

10. Method according to one of Claims 1 to 9,
**characterized**
**in that** at least one of the defined redundancies, or of the redundancies which correspond to it, is line redundancy.

11. Method according to one of Claims 1 to 10,
**characterized**
**in that** at least one of the defined redundancies, or of the redundancies which correspond to it, is 1:N redundancy.

12. Method according to Claim 11,
**characterized**
**in that** the 1:N redundancy is 1:1 redundancy.

13. Method according to one of Claims 1 to 12,
**characterized**
**in that** at least one of the defined redundancies, or of the redundancies which correspond to it, is 1+1 redundancy.

14. Method according to one of Claims 1 to 13,
**characterized**
**in that** the at least some of the data traffic units comprise at least one interface board (5).

15. Method according to one of Claims 1 to 14,
**characterized**
**in that** the at least some of the clock handling units comprise at least one interface board (5).

16. Method according to one of Claims 1 to 15,
**characterized**
**in that** the at least some of the clock handling units comprise a clock generator (1-4).

17. Telecommunications system, comprising:
data traffic units (5) for passing through data traffic, in which case the data traffic units may have lines and assemblies and can be operated in a redundant manner,
clock handling units (1-4) for clock handling, in which case the clock handling units may comprise lines and assemblies and can be operated in a redundant manner,
means for setting up redundancy for at least some of the data traffic units (5), and
means for setting up redundancy for at least some of the clock handling units (1-4),
**characterized**
**in that** the setting-up means are connected to one another such that they make it possible to set up the redundancy for one of the setting-up means by transferring redundancy which corresponds to the redundancy of the other setting-up means.

18. Telecommunications system according to Claim 17,
**characterized**
**in that** the data traffic units comprise at least one interface board (5).

19. Telecommunications system according to Claim 17 or 18,
**characterized**
**in that** the clock handling units comprise at least one interface board (5).

20. Telecommunications system according to one of Claims 17 to 19,
**characterized**
**in that** the telecommunications system is an ATM telecommunications system.

21. Telecommunications system according to Claim 20,
**characterized**
**in that** the clock handling units comprise at least one clock generator (1-4).

22. Telecommunications system according to one of Claims 17 to 21,
**characterized**
**in that** at least one of the setting-up means is designed such that it has access to a central databank.

23. Telecommunications system according to one of Claims 17 to 22,
**characterized**
**in that** at least one of the setting-up means is designed such that it has access to at least one local databank.

24. Telecommunications system according to one of Claims 17 to 23,
**characterized**
**in that** at least one of the setting-up means comprises means for determining redundancy.

25. Telecommunications system according to Claim 24,
**characterized**
**in that** the determining means are software-controlled.

26. Telecommunications system according to one of Claims 17 to 25,
**characterized**
**in that** the setting-up means are designed such that they set the redundancies on a hardware-controlled basis.

27. Telecommunications system according to one of Claims 17 to 26,
**characterized**
**in that** the setting-up means comprise means for selecting one of the redundant units.

28. Telecommunications system according to one of Claims 17 to 27,
**characterized**
**in that** the means for setting up the redundancy of at least some of the clock handling units set up redundancy which corresponds to the redundancy of the data traffic units.

29. Telecommunications system according to one of Claims 17 to 28,
**characterized**
**in that** at least one of the redundancies is board redundancy.

30. Telecommunications system according to one of Claims 17 to 29,
**characterized**
**in that** at least one of the redundancies is line redundancy.

31. Telecommunications system according to one of Claims 17 to 30,
**characterized**
**in that** at least one of the redundancies is 1:N redundancy.

32. Telecommunications system according to Claim 31,
**characterized**
**in that** the 1:N redundancy is 1:1 redundancy.

33. Telecommunications system according to one of Claims 17 to 32,
**characterized**
**in that** at least one of the redundancies is 1+1 redundancy.

## Revendications

1. Procédé pour faire fonctionner un système de télécommunication comprenant des unités de circulation de données (5) et des unités de traitement des horloges (1 - 4) qui peuvent comprendre non seulement des lignes mais également des composants dont au moins une partie peut fonctionner, à chaque fois, de manière redondante, le procédé comportant les étapes suivantes
fixer une redondance soit pour la, au moins une, partie des unités de circulation de données (5), soit pour la, au moins une, partie des unités de traitement des impulsions d'horloges (1 - 4) et
régler la redondance fixée pour la, au moins une, partie pour laquelle la redondance a été fixée,
**caractérisé par** l'étape consistant à :
régler pour l'autre, au moins une, partie, pour laquelle la redondance n'a pas été fixée, une redondance correspondant à la redondance fixée.

2. Procédé selon la revendication 1, **caractérisé en ce que** le système de télécommunication est un système de télécommunication ATM.

3. Procédé selon la revendication 1 ou 2, **caractérisé en ce qu'**une des étapes du réglage comporte une étape d'écriture d'au moins une base de données, qui peut être une base de données centrale ou locale.

4. Procédé selon l'une des revendications 1 à 3, **caractérisé en ce que** l'étape de réglage d'une redondance correspondant à la redondance fixée comporte une étape de détermination de la redondance fixée.

5. Procédé selon la revendication 4, **caractérisé en ce que** l'étape de détermination de la redondance fixée est commandée par logiciel.

6. Procédé selon l'une des revendications 1 à 5, **caractérisé en ce que** l'étape de réglage de la redondance correspondant à la redondance fixée consiste en un réglage à commande matérielle de cette redondance.

7. Procédé selon l'une des revendications 1 à 6, **caractérisé en ce que** le procédé comprend, en outre, une étape de sélection de l'une des unités de circulation de données et unités de traitement des impulsions d'horloges redondantes.

8. Procédé selon l'une des revendications 1 à 7, **caractérisé en ce que** l'étape consistant à fixer la redondance pour au moins une partie des unités de circulation de données se déroule et la redondance lui correspondant est réglée pour au moins une partie des unités de traitement des impulsions d'horloges.

9. Procédé selon l'une des revendications 1 à 8, **caractérisé en ce qu'**au moins une des redondances fixées ou des redondances lui correspondant est une redondance de carte.

10. Procédé selon l'une des revendications 1 à 9, **caractérisé en ce qu'**au moins une des redondances fixées ou des redondances lui correspondant est une redondance de ligne.

11. Procédé selon l'une des revendications 1 à 10, **caractérisé en ce qu'**au moins une des redondances fixées ou des redondances lui correspondant est une redondance 1:N.

12. Procédé selon la revendication 11, **caractérisé en ce que** la redondance 1:N est une redondance 1:1.

13. Procédé selon l'une des revendications 1 à 12, **caractérisé en ce qu'**au moins une des redondances fixées ou des redondances lui correspondant est une redondance 1+1.

14. Procédé selon l'une des revendications 1 à 13, **caractérisé en ce que** la, au moins une, partie des unités de circulation de données comprend au moins une carte d'interface (5).

15. Procédé selon l'une des revendications 1 à 14, **caractérisé en ce que** la, au moins une, partie des unités de traitement des impulsions d'horloges comprend au moins une carte d'interface (5).

16. Procédé selon l'une des revendications 1 à 15, **caractérisé en ce que** la, au moins une, partie des unités de traitement des impulsions d'horloges comprend un générateur d'horloge (1 - 4).

17. Système de télécommunication, comprenant :
des unités de circulation de données (5) servant à exécuter une circulation de données, les unités de circulation de données pouvant comprendre des lignes et des composants et pouvant fonctionner de manière redondante,
des unités de traitement des impulsions d'horloges (1 - 4) servant au traitement des impulsions d'horloges, les unités de traitement des impulsions d'horloges pouvant comprendre des lignes et des composants et pouvant fonctionner de manière redondante,
un moyen pour régler une redondance d'au moins une partie des unités de circulation de données (5) et
un moyen pour régler une redondance d'au moins une partie des unités de traitement des impulsions d'horloges (1 - 4),
**caractérisé en ce que**
les moyens de réglage sont reliés l'un à l'autre de manière à permettre le réglage de la redondance de l'un des moyens de réglage en adoptant une redondance correspondant à la redondance de l'autre moyen de réglage.

18. Système de télécommunication selon la revendication 17, **caractérisé en ce que** les unités de circulation de données comprennent au moins une carte d'interface (5).

19. Système de télécommunication selon la revendication 17 ou 18, **caractérisé en ce que** les unités de traitement des impulsions d'horloges comprennent au moins une carte d'interface (5).

20. Système de télécommunication selon l'une des revendications 17 à 19, **caractérisé en ce que** le système de télécommunication est un système de télécommunication ATM.

21. Système de télécommunication selon la revendication 20, **caractérisé en ce que** les unités de traitement des impulsions d'horloges comprennent au moins un générateur d'impulsion d'horloge (1 - 4).

22. Système de télécommunication selon l'une des revendications 17 à 21, **caractérisé en ce qu'**au moins un des moyens de réglage est exécuté de manière à avoir accès à une base de données centrale.

23. Système de télécommunication selon l'une des revendications 17 à 22, **caractérisé en ce qu'**au moins un des moyens de réglage est exécuté de manière à avoir accès à au moins une base de données locale.

24. Système de télécommunication selon l'une des revendications 17 à 23, **caractérisé en ce qu'**au moins un des moyens de réglage comprend des moyens pour déterminer une redondance.

25. Système de télécommunication selon la revendication 24, **caractérisé en ce que** les moyens de détermination sont commandés par logiciel.

26. Système de télécommunication selon l'une des revendications 17 à 25, **caractérisé en ce que** les moyens de réglage sont exécutés de manière à procéder à un réglage à commande matérielle des redondances.

27. Système de télécommunication selon l'une des revendications 17 à 26, **caractérisé en ce que** les moyens de réglage comprennent des moyens pour sélectionner une des unités redondantes.

28. Système de télécommunication selon l'une des revendications 17 à 27, **caractérisé en ce que** les moyens pour régler la redondance d'au moins une partie des unités de traitement des impulsions d'horloges règlent une redondance correspondant à la redondance des unités de circulation de données.

29. Système de télécommunication selon l'une des revendications 17 à 28, **caractérisé en ce qu'**au moins une des redondances est une redondance de carte.

30. Système de télécommunication selon l'une des revendications 17 à 29, **caractérisé en ce qu'**au moins une des redondances est une redondance de ligne.

31. Système de télécommunication selon l'une des revendications 17 à 30, **caractérisé en ce qu'**au moins une des redondances est une redondance 1:N.

32. Système de télécommunication selon la revendication 31, **caractérisé en ce que** la redondance 1:N est une redondance 1:1.

33. Système de télécommunication selon l'une des revendications 17 à 32, **caractérisé en ce qu'**au moins une des redondances est une redondance 1+1.
